# EUROPEAN PATENT APPLICATION

(11) **EP 1 351 180 A2**
(43) Date of publication of application: **08.10.2003**
(21) Application number: 03252074.4
(22) Date of filing: 01.04.2003
(51) Int. Cl.: G06F 17/60

(54) **Rules-based, targeted redeemable comp generation and management**

(30) Priority: 01.04.2002 US 114821
(71) Applicant: Harrah's Operating Company, Inc., Memphis, TN 38117 (US)
(72) Inventor: Stanley, Tim, Henderson, Nevada 89052 (US); Reeves, Timothy J., Overland Park, Kansas 66223 (US); Parks, Ben, Las Vegas, Nevada 89123 (US); Norton, David, Las Vegas, Nevada 89145 (US)
(74) Representative: McLeish, Nicholas Alistair Maxwell

(57) **Abstract**

A rules-based comps management system generates comps for patrons by targeting patrons and/or certain patron activity. In an embodiment, the system facilitates multiple, simultaneous comps promotions, each comps promotion definable to apply to a single location, a plurality of locations, or all of an enterprise's locations. Using patron activity data, the system generates comps in one or more promotions according to each promotion's rules. The system tracks comps as patrons earn and redeem them.

## Description

### BACKGROUND OF THE INVENTION

### Field of the Invention

The present invention relates generally to the generation and management of redeemable "points" that patrons earn from their commercial activity with an enterprise, and in particular to the generation and management of comps in a casino or other gaming environment.

### Description of Background Art

Commercial enterprises often use some methodology to value their customers based on the amount of revenue the enterprise can make from the customers. Identifying customers that generate more revenue for the enterprise allows the enterprise to foster a close relationship with those customers. Enterprises thus seek to retain these customers by keeping them loyal to the enterprise. Often, this is done through special offers and deals. Many companies offer programs in which patrons earn value that can be redeemed for goods or services. Such systems are found in many industries, including frequent flyer miles offered by airlines and points systems offered by many credit card companies.

Complimentaries (herein referred to as "comps") are used for example in casino environments to increase customer traffic and stimulate specific customer behaviors. From a casino's perspective, the value of the casino's patrons, or players, is often based on each player's gaming activity ― e.g., time gambling, average and total bets, coin in. Casinos often classify players based on their rating and offer special promotions and other offers to the players accordingly. For example, a player who bets more often and at a larger denomination is offered comps, which the player can redeem for goods, services, or additional play funded by the enterprise. This creates incentives for the player to play at the same casino to develop his rating and thus increase the comps and other special promotions received.

Comps are traditionally managed using paper entries, but for casinos that have multiple properties, paper-based systems do not allow players' activity at one property to be tracked at another. Some systems track player gaming electronically at multiple properties, such as U.S. Patent No. 6,302,793, entitled "Multi-property player tracking system"; however, these systems do not track non-gaming activity, nor do they enable multiple comps promotions running simultaneously at different sets of properties. Moreover, these electronic systems generate comps for patrons using fixed comp schedules, where all participating customers are treated the same and are given a particular number of comps based on their play, which cannot be easily changed to meet marketing and promotional requirements. Accordingly, existing electronic systems having fixed comp schedules do not allow the precise targeting of patrons and their activity that is desired by many enterprises. In addition, the fixed comp schedules do not allow enterprise personnel to readily create new comps promotions and adjust how comps are generated for different patrons based on their activity in existing comps promotions.

### SUMMARY OF THE INVENTION

Accordingly, a comp management system enables multiple comps promotions to be conducted across different sets of an enterprise's locations. In a comps promotion, an enterprise's patrons earn comps ― or other redeemable "points" ― from their activity at one of the enterprise's locations. A comps promotion is defined by a set of rules that can selectively target customers, activities, and locations for qualification for earning comps. Through this comprehensive rules-based approach, the system monitors this patron activity and generates comps according to the rules therefor. The rules for each promotion may be distinct, allowing the enterprise to use each promotion to target different combinations of patrons and patron activity (e.g., generating comps for frequent players who also stay at associated hotels). Using these rules, the system can control the comps generated by activity type, amount, rate, volume, or any other statistical measure. Each comps promotion applies to one or more of the enterprise's locations, allowing for multiple, simultaneous comps promotions at both the single and multiple property levels.

In one embodiment, the comp management system acquires data on various types of patron activity through various data acquisition management systems at each of the enterprise's locations. This patron activity may include gaming, lodging, eating, attending an event, and purchasing, and the patron activity may be in one location or occur across multiple locations. Using the patron activity data, the system applies a set of rules for one or more promotions to generate comps for the patrons based on their activity, wherein each promotion's rules dictate how many comps are generated. The rules for comps generation preferably include patron targeting rules that allow the system to specifically and flexibly target desired patrons and patron activity. The earned comps are stored by the system, and patrons may then redeem their comps at various places throughout the enterprise, such as at a restaurant.

In one embodiment, a comps promotion has a rolling accumulation period, wherein patrons can redeem only those comps earned within a specified time period. Comps earned before that specified time are expired. In another embodiment, a comps promotion may have a cap for comps, where patrons cannot earn greater than a specified upper limit of comps. Once a patron reaches the upper limit of comps in the comps promotion, the system will not generate any additional comps for the patron. Preferably, this cap may be overridden by manual adjustments made by enterprise personnel. In yet another embodiment, a play/level frequency limitation is implemented. With this limitation, a patron must maintain a specified number of comps within a given time period; otherwise, all comps earned by the patron to that point expire.

Advantageously, a comps promotion can be run simultaneously with other promotions, including drawing promotions. In an embodiment, the system also manages drawing promotions where patrons earn entries similar to how they earn comps, and the entries are then eligible for one or more drawings. In addition, multiple comps promotions and drawing promotions may run simultaneously and apply to different sets of locations. If two or more promotions are running and apply to the same location, patron activity at that location may lead to the generation of comps for patrons in each promotion. Because the rules for different promotions may be different, the enterprise can use different promotions to uniquely and specifically target certain patrons and patron activity.

In one embodiment of the invention, some or all of the locations are casino properties, wherein the promotions are definable among a set of properties or for all properties (i.e., at the enterprise or "brand" level). Patron activity may include ― depending on the availability of services at the property ― gaming at machines and gaming tables, staying at hotels, eating at restaurants, attending shows, and buying merchandise. In another embodiment, the locations or properties include cruise ships, restaurants, and other retail environments. In other aspects, the locations may include virtual locations, such as web sites and the like. Accordingly, the system enables multi-tiered, multiple promotions, each promotion being associated with a single property, a plurality of properties, or all properties in the enterprise. In another aspect of an embodiment, cross-location management and adjustments to promotions are enabled. Centralized control over promotions at one or more locations eases maintenance and support efforts.

### BRIEF DESCRIPTION OF THE DRAWINGS

Fig. 1 is a diagram of multiple, simultaneous promotions conducted by an embodiment of the comp management system.

Fig. 2 is a diagram of an example of a scheme of conducting simultaneous promotions at different sets of locations.

Fig. 3 is a schematic diagram of an embodiment of the comp management system at the enterprise level.

Fig. 4 is a block diagram of an embodiment of the comp management system at the location or property level.

Fig. 5 is an embodiment of a user interface for modifying a promotion.

Fig. 6 is an embodiment of a screen flow for the manual adjustments function.

### DETAILED DESCRIPTION OF THE PREFERRED EMBODIMENTS

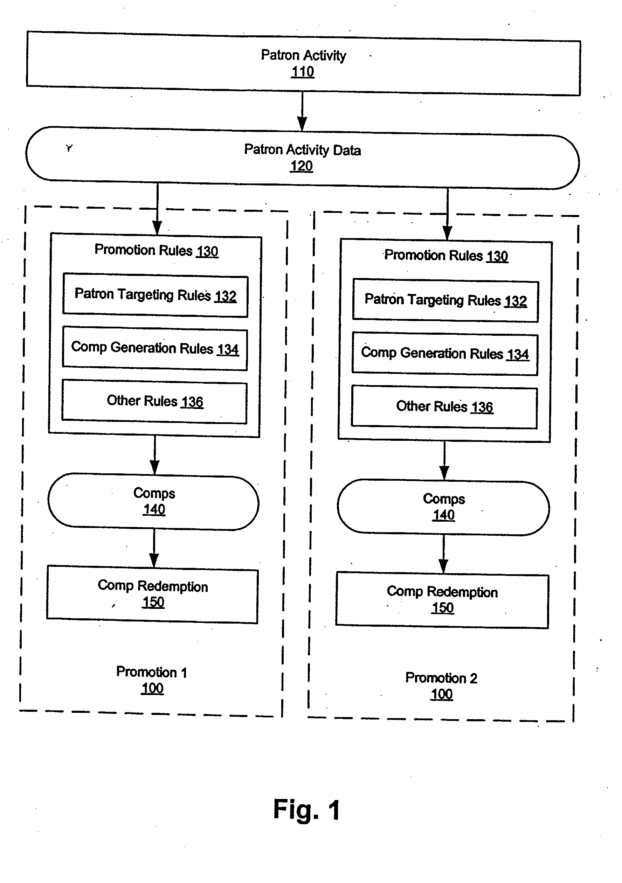

The diagram of Fig. 1 shows how multiple promotions 100 are implemented according to a preferred embodiment. Patrons of the enterprise engage in patron activity 110, which in an embodiment includes casino gaming, staying in a hotel, eating at a restaurant, seeing a show, and purchasing merchandise. The enterprise collects patron activity data 120 relating to the patron activity 110, which is accessible by a comp management system. The patron activity is preferably activity for which data relating thereto can be electronically collected. The data can be collected in real time or in batches (e.g., nightly).

Each promotion 100 is defined, inter alia, by a set of promotion rules 130. In response to the patron activity 110, as represented by the patron activity data 120, the comp management system applies the promotion rules 130 from one or more promotions 100 to the activity data to generate comps 140 in the promotions 100, where each comp 140 is associated with a patron and based on the patron's activity. In an embodiment, the promotion rules 130 include sets of patron targeting rules 132, comp generation rules 134, and other rules 136. The patron targeting rules 132 enable the system to precisely target a set of patrons who are eligible to earn comps in the particular promotion 100, the set of patrons defined by, e.g., certain shared characteristics identified by the patron targeting rules 132. The comp generation rules 134 define whether and how many comps 140 are generated for a patron in response to the patron's activity 110. In addition, other rules 136 are used to, for example, define what activity can be used to generate comps 140 and the number of comps generated when an offer is redeemed.

In addition, comps promotions may include limitations upon the accumulation of comps for individual patrons. For example, a comps promotion may have a rolling accumulation period, wherein only those comps earned within a specified time period can be redeemed. After the rolling accumulation time period, earned comps expire and cannot be redeemed. In another embodiment, a comps promotion may have a ceiling for comps, where a patron cannot earn greater than a specified upper limit of comps. Once a patron reaches the upper limit of comps in the comps promotion, the system will not credit any additional comps to the patron. Preferably, the ceiling does not apply to manual adjustments made by casino personnel, which allows the ceiling to be manually overridden. In yet another embodiment, a play frequency limitation may be implemented With this limitation, a patron must earn a specified number of comps within a given time period; otherwise, all comps earned by the patron to that point expire. These three limitations can be implemented alone, or in combination, and other limitations on the accumulation of comps can be added. Such limitations enable the enterprise to better adjust the incentives created by each comps promotion.

Importantly, the same patron activity (e.g., playing at a slot machine) may lead to the generation of comps 140 for a patron in several different promotions 100 (e.g., in promotions 1 and 2 in Fig. 1), including single-property and multi-property promotions 100, depending on the configuration of the system. This is because multiple promotions apply their promotion rules 130 to the patron activity data 120 to generate comps 140 associated with each promotion 100.

Once patrons have earned sufficient comps 140, the patrons can redeem 150 their comps for goods, services, or additional play from the enterprise. For example, a patron with sufficient comps may redeem 150 comps for a free meal or a free night's stay at a hotel.

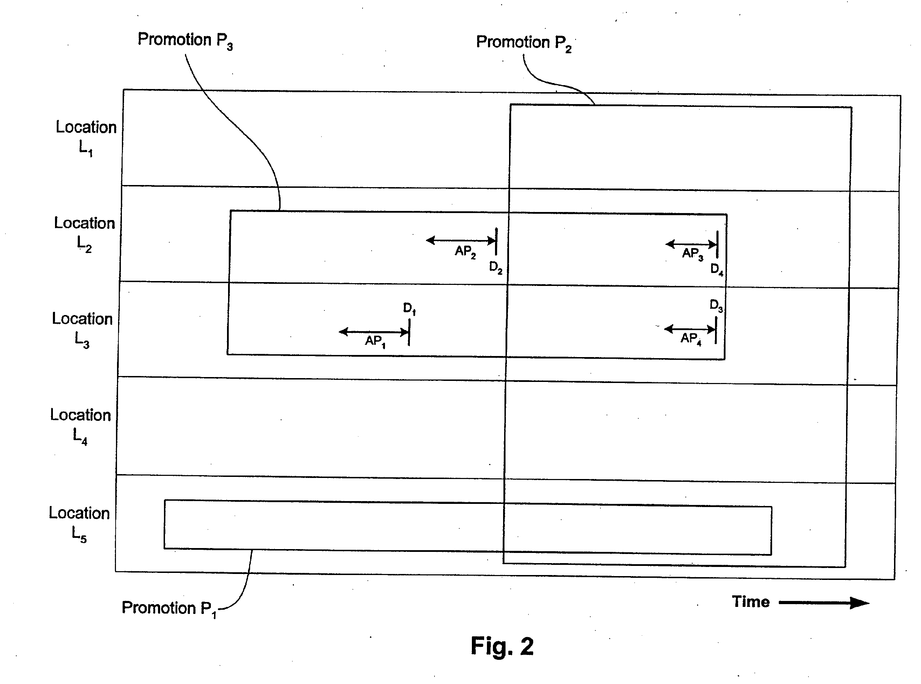

Fig. 2 shows an example of several enterprise promotions held across various locations. The horizontal axis of the diagram represents time, and the vertical axis shows the applicability of each promotion Pₙ to the five locations Lₘ of the enterprise. Shown in Fig. 2 are three promotions: two comps promotions, P₁ and P₃, and one drawing promotion, P₂.

The promotion that begins first, P₁, is an example of a location-specific promotion, as it applies only to location L₅. While P₁ is pending, as depicted by the box P₁, patron activity associated with location L₅ leads to the generation of comps according to the rules of promotion P₁ (as shown in Fig. 1). Promotion P₂ overlaps in time with promotion P₁, and is therefore conducted simultaneously with that promotion during the overlapping period. Promotion P₂ is an enterprise-level comps promotion, applying to each of the enterprise's locations. Any patron activity associated with the enterprise while P₂ is pending may lead to comp generation in promotion P₂ according to its rules.

During the period of time that promotions P₁ and P₂ are running simultaneously, as indicated by their overlap in Fig. 2, patron activity at location L₅ may lead to the generation of comps in both promotions P₁ and P₂; however, patron activity at locations L₁, L₂, L₃, and L₄ only leads to the generation of comps in promotion P₂. To effect both the location-specific and multiple location promotions, the system applies each promotion's rules to the patron activity data obtained at the set of locations to which the promotion applies. While only two comps promotions are shown, the system is preferably capable of handling any number of current promotions. Accordingly, the system conducts simultaneous promotions at the enterprise, multiple property, and single property levels.

Another advantageous feature of a preferred embodiment is the ability of the system to conduct drawing promotions and comps promotions simultaneously. Promotion P₃ is a drawing promotion that applies to multiple locations, L₂ and L₃, having four drawings associated therewith. A drawing promotion is defined by a set of rules that allocate qualifying entries to patrons based on their activities, wherein the patrons may optionally activate their entries to participate in a drawing. For promotion P₃, patron activity at either location L₂ or L₃ can lead to qualifying entries in the promotion. In one embodiment, patrons can thereafter activate their entries for one of the drawings at either location during any of the activity periods AP₁₋₄, regardless of where the qualifying patron activity that resulted in those entries occurred. Drawings D₁ and D₃ are held at location L₃, and drawings D₂ and D₄ are held at location L₂. The promotion is thus conducted across the two locations, wherein activity at either location can lead to qualifying entries, which can be activated at either location for one of the drawings.

### System Architecture

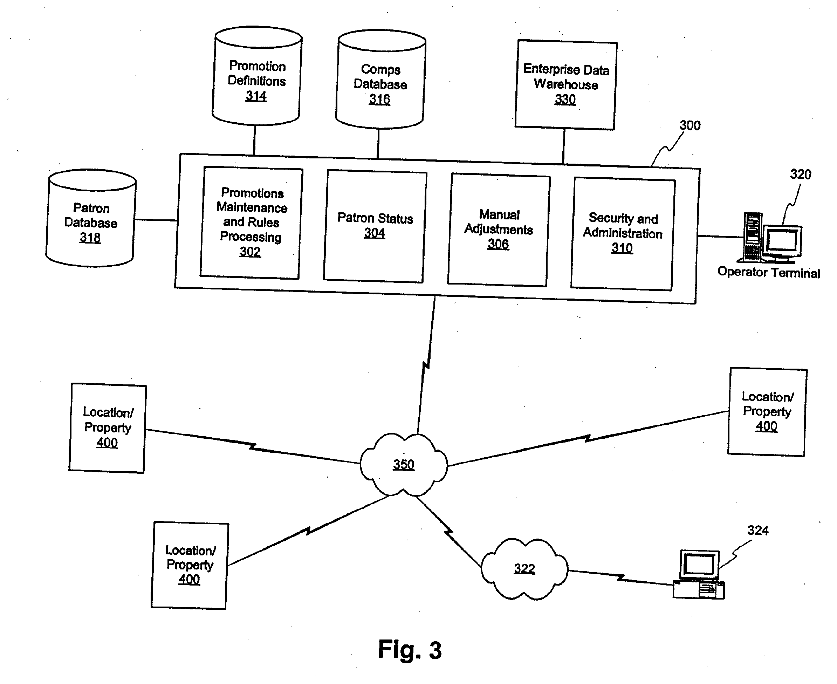

Fig. 3 is a schematic diagram of an embodiment of the comp management system at the enterprise level. The enterprise comprises a number of locations 400 coupled together via a network 350. The network 350 may be, e.g., the Internet or an enterprise's private network (e.g., a WAN, VPN, or the like). In an embodiment, the comp management system is further coupled to the Internet 322, whereby patrons can access the comp management system using a personal computer 324 connected to the Internet 322.

The comp management system is managed by a comp management application 300. The comp management application 300 is accessible from an operator terminal 320. The application 300 is preferably run on a server, accessible via a client interface or application on each terminal 320. In one embodiment, the operator terminal 320 comprises a computer system, which is coupled to the network 350. There may be any number of operator terminals 320 coupled to the system, and, in a preferred embodiment, each location 400 has an operator terminal 320 adapted to access the comp management application 300. The comp management application 300 may be on a computer system at one of the enterprise's locations 400, or at a remote location. Having the enterprise promotions accessible from an operator terminal 320 at the enterprise's locations 400 enhances the cross-property management capabilities of the system. For example, an operator could manually adjust a patron's comps in an enterprise-level promotion from an operator terminal at a particular location 400, and this adjustment would automatically affect the patron's account at each of the enterprise's properties.

The functionality of the comp management application 300 is divided into several modules for performing related tasks. In a preferred embodiment, the modules of the comp management application 300 include a Promotions Maintenance and Rules Processing module 302, a Patron Status module 304, a Manual Adjustments module 306, and a Security and Administration module 310. Although the comp management application 300 is described in one embodiment as a single application, its functions could be performed by more than one application, which may reside on different systems. The comp management application 300 is coupled to a Promotion Definitions database 314 and a Comps database 316, and the application 300 is further coupled to a Patron database 318. The comp management application 300 is also coupled to an Enterprise Data Warehouse 330 for storing and retrieving archived data relating to past promotions.

The Promotions Maintenance and Rules Processing (PMRP) module 302 enables a promotions operator to create and define one or more promotions. An operator accesses the PMRP module 302 to create and define a promotion. Each promotion may apply to the particular location from which the promotion is created, or it may apply to several or all of the locations of the enterprise. In an embodiment, the PMRP module 302 is accessible from any of the enterprise's properties, so that promotions created at one location may apply to other locations. In this way, an operator can use the PMRP module 302 to maintain promotions that apply to remote locations. The PMRP module 302 also enables an operator to modify promotions after they have been created.

The Patron Status (PS) module 304 enables patrons to access information regarding their eligibility, their current comps in various promotions, and other information for the relevant promotions. In one embodiment, a patron can access the PS module 304 over the Internet 322 from a personal computer 324, or from any other web device connected thereto. In another embodiment, one or more customer service interfaces 420 are located at a property 400, which are communicatively coupled to the PS module 304 for providing the associated information to patrons. In one embodiment, a customer service interface 420 comprises a computer having an output display terminal and a user input, such as a card reader and a touchscreen. Patrons can access information for their account with a customer service interface 420 by swiping their cards through the card reader (i.e., "carding in"). The customer service interface 420 may be housed in a kiosk or other user accessible housing.

The Manual Adjustments (MA) module 306 enables the promotions operator to monitor the performance and status information of a particular promotion in real-time. In addition, the MA module 306 enables the operator to view information specific to individual patrons and make adjustments to patrons' comps and other patron-specific information. This functionality might be used, for example, when a patron complains, and the operator desires to credit the patron's account with one or more comps. The ability to make manual adjustments is also useful when there are technical problems with the system, and resulting errors need to be corrected. Preferably, an adjustment made to a patron's comps by an operator at one property affects the patron's comps in the promotion at each of the properties to which the promotion applies; therefore, the adjustment does not need to be made separately by an operator at each property.

In one embodiment, a Security and Administration module 310 reduces dependence on IT personnel by enabling the promotions operator to perform routine functions, such as assigning internal users and day-to-day internal user setup. With this module 310, the operator can designate other internal users and their permission or access levels (which may depend on the property from which the system is accessed), as well as varying permission levels for different promotion management and reporting tasks.

As noted, the Promotion Definitions database 314 stores information regarding the promotions, such as each promotion's attributes and rules. The attributes of a promotion according to a preferred embodiment include the start and end dates for when the promotion is running and the locations to which the promotion applies. A promotion's rules define how the system responds to events to conduct the promotion. For example, a promotion's patron targeting and comp generation rules dictate how comps are generated based on patron activity. When an operator uses the PMRP module 302 to create a new promotion or modify the attributes or rules of an existing promotion, these additions or changes are reflected in the Promotion Definitions database 314.

When comps are generated for each promotion in accordance with the promotion's rules for comp generation, the comps are stored in the Comps database 316. The Comps database 316 is coupled to the comp management application 300 for receiving data relating to the comps generated by the PMRP module 302 for each promotion. In an embodiment of the system, the Comps database 316 stores information regarding the comps in each promotion and the patrons with which the comps are associated. The Comps database 316 is further adapted to provide this information to the comp management application 300 upon request. For example, the PS module 304 may be used to retrieve comps data from the Comps database 316, and the MA module 306 may be used to view and modify the comps for a particular patron.

The Patron database 318 is adapted to provide the comp management application 300 with data regarding individual patrons, or players. The Patron database 318 includes patron profiles for patrons from all of the supported enterprise properties. Patron accounts in the Patron database 318 include detailed information such as the patron's preferences, interests, gaming and lodging history, credit rating, comp level, theoretical win value, and accumulated activity points. A patron's theoretical win value is determined according to gaming data or other patron activity accumulated at any of the locations affiliated with the enterprise. Activity points are determined in part by patron activity, but may also be augmented by special offers and various other promotional programs.

Data accumulated by the management systems (described below) are updated to the Patron database 318, where they may be accessed by personnel at any of the enterprise's locations throughout the network 350. Generally, the various management systems track patron activity by a unique patron ID associated with each patron's account in the Patron database 318. In one embodiment, patrons are issued player tracking cards, which are used to provide the patrons' ID to the various management systems. The player tracking cards have a magnetic strip with the patron's ID encoded thereon, and the cards can be swiped at card readers coupled to the various management systems to provide the systems with the patron's identity. In this way, patron activity at any of an enterprise's locations is preferably immediately accessible via the network 350. On-line access to a patron's activities and other data at all of its locations allows the enterprise to implement cross-property incentive programs, manage customer offer programs more effectively, and provide more personalized services to its patrons.

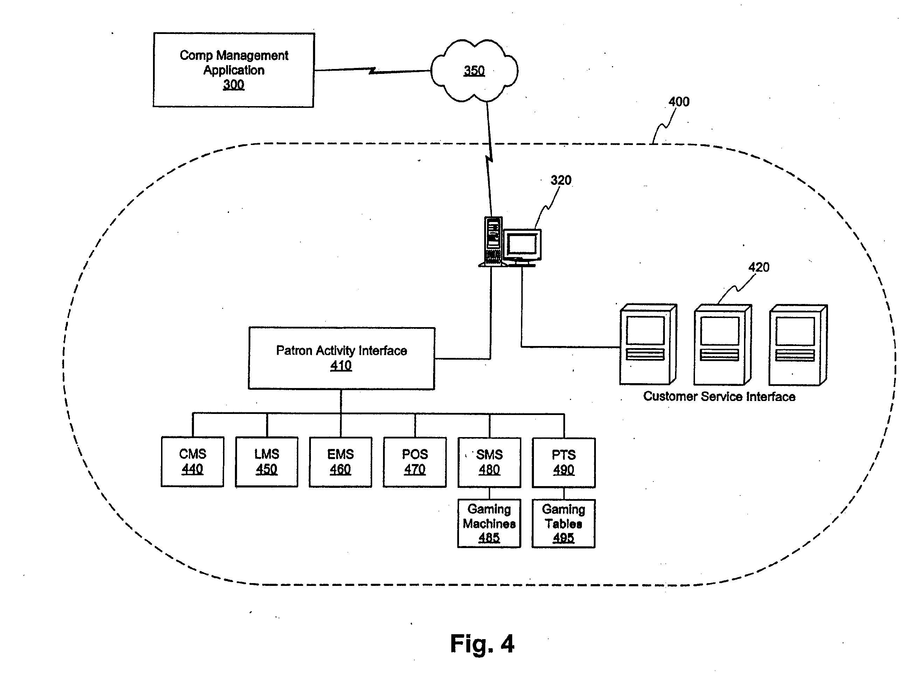

Fig. 4 is a block diagram of an embodiment of the comp management system at the location or property level. Where a location 400 is a physical one (e.g., a casino), it may be called a property; however, the comp management system can support other types of enterprise locations, such as web sites. Each enterprise location 400 includes a Patron Activity interface 410 and, preferably, one or more operator terminals 320, one or more customer service interfaces 420, and a display system 430. Having an operator terminal 320 at each property 400 allows local promotions operators to create and customize promotions at the property level, in real-time, and in response to market conditions. As noted, the properties 400 are coupled to each other and to the comp management application 300 via network 350. In an embodiment, network 350 is a wide-area network. An operator terminal 320 or another computer system may serve as a gateway from the property 400 to the network 350.

At the property 400 is a Patron Activity interface 410, which in one embodiment uses an API for sending data pertaining to local patron activity over the network 350 to the comp management application 300. The Patron Activity Interface 410 communicates with several computer systems for monitoring and tracking operations in an enterprise, such as a casino. Depending on the services offered at a property 400, any combination of the following systems might be used to gather patron activity data: a Casino Management System (CMS) 440, a Lodging Management System (LMS) 450, an Event Management System (EMS) 460, a Point of Sale system (POS) 470, a Slot Monitoring System (SMS) 480, and a Pit Tracking System (PTS) 490. U.S. Patent 5,761,647, "National Customer Recognition System and Method," explains how a CMS 440, a LMS 450, an EMS 460, a POS 470, a SMS 480, and a PTS 490 are used to track patrons' gaming and non-gaming activity at a plurality of affiliated casino properties communicatively coupled by a wide-area network. A suitable system for managing some or all of these point-of-sale operations is the 9700 Hospitality Management System (HMS), offered by MICROS Systems, Inc. The 9700 HMS is specifically designed to handle high usage, multiple revenue center environments, and it enables flexibility in the development of custom point of sale applications.

In one embodiment, patrons are issued tracking cards to interface with the comp management system. Each tracking card preferably includes a magnetic strip, microchip, or other mechanism for storing machine-readable data thereon. When a patron performs some activity at a location, the patron uses the tracking card to interface with the system. For example, in the case of magnetic strip cards, the patron swipes the card through a card reader. In an alternate or additional method of tracking patron activity, the patron or enterprise personnel can manually enter a patron ID number into a terminal coupled to the system. This activity may include playing a game in a casino, making a reservation, staying in a hotel, purchasing something in a retail environment, eating at a restaurant, and attending a show or other event.

In one embodiment, the CMS 440 receives patron data by way of their tracking cards swiped at card readers, workstations, and dumb terminals located at various venues throughout the property and couples the received data to the Patron database 318. The CMS 440 may be a single, centralized system supported on a central LAN at a location, a distributed system comprising local management systems associated with each location's LAN, or a hybrid system including both centralized and distributed components.

The CMS 440 is further adapted to send data to the Patron Activity interface 410 when a patron redeems an offer. In the context of the present invention, one or more offers are sent to patrons, who may then redeem the offers at one of the locations. An offer is associated with an offer ID, which the system uses to track and identify the type of offer redeemed. An operator may manually enter a redeemed offer into the CMS 440 from a local terminal 320. Alternatively, the patrons may redeem offers, e.g., from a home computer 324 coupled to the system over the Internet 322, at a customer service interface 420, or using other equipment at a location 400. When an offer is redeemed, the CMS 440 sends a data packet to the comp management application 300 that includes the offer ID that was redeemed and the patron who redeemed it.

The LMS 450 comprises the software necessary for managing hotel operations within the casino, including reservations, room service, and other activities associated with hotel operations. In a preferred embodiment of the invention, the LMS 450 communicates with the CMS 440 to search locally for selected customer information available on that system. However, LMS 450 may include its own local data store for customer data. The LMS 450 transmits data regarding patrons' lodging activity to the Patron Activity interface 410 when patrons check in and out of a hotel. In addition, the LMS 450 may transmit lodging data upon a request from the Patron Activity interface 410. The lodging data includes, for example, the dates that a patron stays at a hotel, room service activity, and billing information due to the patron's stay in the hotel.

The EMS 460 comprises software for handling ticketing information, reservations, and sales. The EMS 460 compiles patron activity data when patrons purchase tickets for an event (such as a show at the location), make reservations for an event, and attend the event. The EMS 460 transmits this data to the Patron Activity interface 410.

The POS 470 comprises accounting software for operating restaurants and retail venues within the location as well as software for transmitting charge information to the other management systems. For example, data relating to meals charged to rooms are transmitted from the POS 470 to the LMS 450, and data relating to redeemed meal comps are transmitted from the POS 470 to the CMS 440. The Patron Activity interface 410 receives data relating to patron's purchases at a location from the POS 470. This purchasing data includes, in an embodiment, the items or services purchased, the restaurant or retail venue where purchased, and the purchase amounts.

The SMS 480 comprises a computer system that monitors and tracks bets made by patrons at gaming machines 485. Gaming machines 485 may include slot machine, video poker machines, or the like. In a preferred embodiment, bet tracking is accomplished through a card reader (not shown) associated with a slot machine 485. A patron inserts his tracking card (described above) in the card reader to initiate bet tracking and removes it to terminate bet tracking. A patron's betting activity at a gaming machine 485 accumulates in the SMS 480 until the gaming session is terminated or when the CMS 440 requests an account status, at which time the data is transferred to the CMS 440. Bet tracking data accumulated by the SMS 480 includes the identification of the games played, the amount won or lost, and the time period that the patron played the game. U.S. Patent 5,429,361, describes one system for tracking the betting activity of casino patrons at gaming machines.

The PTS 490 automatically tracks patron activity at gaming tables 495. The PTS 490 is supported on a computer system that transmits patron activity data to the CMS 440. In one embodiment, the PTS 490 uses card readers associated with patrons' positions at the gaming tables 495 to track their betting activity. Alternatively, an employee of the enterprise, such as a pit boss, manually enters patrons' gaming data into the PTS 490. In one embodiment, data regarding betting activity include a patron's time at a gaming table 495 and the table's minimum bet. U.S. Patent 5,613,912, describes one system for automatically tracking the betting activity of casino patrons at gaming tables.

Each of the types of qualifying patron activity described above are communicated to the comp management application 300, which can lead to the generation of comps in one or more promotions that apply to the particular location 400 according to each promotion's rules. Because the patron activity data is transmitted to the system over the network 350, patron activity in a single location 400 can lead to comps in several promotions that may apply to the enterprise at the single location, multiple locations, or enterprise level.

### System Operation

### Overview

In an exemplary promotion for a casino, a comps promotion has a set of attributes and rules. The comps promotion is defined over a period of time within which patrons, or players, have opportunities to earn comps based on their patron activity and the promotion's rules for comp generation.

The rules of a comps promotion specify what actions should be taken responsive to events. For example, a promotion has a set of patron targeting, play eligibility, and comp generation rules, which determine whether and how a patron earns comps through the patron's activity at a location.

### Setting Up a New Promotion

The comp management system enables a promotions operator to set up new comps promotions and modify existing ones. Once the promotions operator has designed a particular promotion, the operator creates the new promotion using the comp management application 300. In a preferred embodiment, a promotion can be created from any operator terminal 320. Accessing the comp management application 300, an operator first creates a new comps promotion and configures its attributes. In one embodiment, the comps promotions include the following attributes:
- Promotion start and expiration dates
- Locations associated with the promotion (one or more)
- Limitations on accumulation of comps (e.g., rolling accumulation period, comps ceiling, or play frequency limitation)
As illustrated in Fig. 2, promotions can be either location-specific or apply to multiple locations, including a subset of the enterprise's locations or to all of the enterprise's locations (i.e., an enterprise-wide promotion).

After the promotion's basic attributes are defined, the operator defines a set of rules that apply to the promotion by accessing the PMRP module 302. In an embodiment, a promotion's rules are structured in the form: "*If* [condition] *Then* [action]." The "*If*" section of the rule contains one or more conditions that trigger the rule, and the conditions map to function calls that retrieve and evaluate the condition. The "*Then*" section of the rule specifies a set of actions to be performed if the set of conditions occur. The set of actions are taken if the set of conditions are true, and the actions map to function calls that execute those actions. In the context of the comp management system, for example, a comp generation rule might contain an action for generating comps for a patron if the patron plays a predetermined amount in a slot machine: "*If* [patron's coin in > $300], *then* [generate 10 comps]."

In one embodiment, the PMRP module 302 includes a rules editor/engine for defining and processing the rules associated with each promotion. A rules editor/engine is a software package that is used to create and process the rules of a promotion. A rules editor/engine contains software for editing rules and for processing the rules. Once defined, a promotion's attributes and rules are stored in the Promotion Definitions database 314. Rules engines are particularly beneficial where there are a large number of rules and where the rules may change frequently. In either case, the rules engine beneficially enables a user ― such as a promotions operator ― to encode new rules using a language that a business user can easily comprehend. By reducing the reliance on technology personnel, associated costs and turnaround times are reduced.

In one embodiment of the comp management system, the rules associated with each promotion are be grouped into rule sets, wherein the rules in each rule set trigger, or are applied, upon different events. An exemplary promotion includes the following rule sets:
- Play Eligibility
- Patron Targeting
- Comp generation
- Offer Redemption

The Play Eligibility rule set enables the system to determine whether a patron's activity (e.g., gaming, lodging, purchasing, attending an event, etc.) is eligible to generate comps in the promotion. The system maintains a state that indicates whether the patron's activity is eligible in a "Play" variable. The following table lists examples of variables that the Play Eligibility rule set rules use to evaluate conditions, and the actions that any of these rules may take if the conditions are true.

| **Variables** | **Potential Actions** |
|---|---|
| Game ID / Activity Code | Set Play to be eligible |
| Day of Week / Time of Day / Date Hold Percentage (a value that indicates a game's hold) | Set Play to be not eligible |

For example, a Play Eligibility rule for not allowing patrons to earn comps by playing a particular game on Saturdays is: "*If* [the Game ID = 12345] *and* [the Day of Week = Saturday], *then* [set Play to be not eligible]."

Similarly, the Patron Targeting rule set enables the system to determine whether the patron is eligible in the promotion or drawing. The system maintains a state that indicates whether each patron is eligible to earn comps, which may be stored in the Patron database 318. The following table lists examples of variables that the Patron Targeting rule set rules use to evaluate conditions, and the actions that any of these rules may take if the conditions are true.

| **Variables** | **Potential Actions** |
|---|---|
| Patron X's Hold Percentage (a value that indicates a patron's hold based on the patron's play history) Patron Account (new to property or brand) Tier Patron Mail Code Offer Code Day of Week / Time of Day / Date Patron in Target List (filename) | Set Patron X to be eligible |
| | Set Patron X to be not eligible |

These variables are patron-specific and, in one embodiment, are stored in and retrievable from the Patron database 318. An example of a Patron Targeting rule for only allowing patrons to earn comps if their hold percentage is above a predetermined value is: "*If* [Patron X's Hold Percentage > Y], *then* [set Patron X to be eligible]."

The Patron Targeting rule set advantageously allows the enterprise to specifically target patrons for each promotion. As can be appreciated, the rule set allows the enterprise to specify a set of conditions or attributes that define which patrons can participate in a particular promotion. In one embodiment, the enterprise specifically identifies patrons that may participate in a promotion by placing those individuals in a target list. The target list is preferably a data file stored within or accessible to the comp management system. This target list allows enterprise personnel to use of any external patron targeting mechanism (such as data mining) to construct a list of patrons to be eligible for a particular promotion. As shown in the table above, a Patron Targeting rule can be based on whether a patron is included in the target list. This gives the enterprise a very high level of control to target patrons with a promotion, in addition to generalized rules for patron targeting.

The Comp generation rule set enables the system to generate comps for a patron in a promotion based on the patron's activity while the promotion is pending. The following table lists examples of variables that the Comp generation rule set rules use to evaluate conditions, and the actions that any of these rules may take if the conditions are true.

| **Variables** | **Potential Actions** |
|---|---|
| Trips Frequency in Time Period Patron's Hold Percentage in Time Period Comps Accrued in Time Period Minutes Played in Time Period Patron's Hold Percentage Patron Account Tier Offer Code Game Code Day of Week / Time of Day / Date Amount Won/Loss | Generate X comps |
| | Generate X comps for every [hold percentage, minutes played, amount won, etc.] |

An example of a comp generation rule that gives a patron comps for playing a game is: "*If* [Game Code = Y], *then* [generate X comps for Patron Z]."

The Offer Redemption rule set specifies rules to perform when a patron redeems a coupon. The following table lists examples of variables that the Offer Redemption rule set rules use to evaluate conditions, and the actions that any of these rules may take if the conditions are true.

| **Variables** | **Potential Actions** |
|---|---|
| Offer Code | Give X number of comps |
| Day of Week / Time of Day / Date | Give X times the number of comps |

The PMRP module 302 is programmed to evaluate, responsive to particular events, the rules defined for all pending promotions. For one embodiment, the events that trigger processing of each promotion's rule sets are described in the following table. When one of these events occurs and is related to a location to which the promotion applies, the PMRP module 302 processes each of the rules in the promotion's corresponding rule sets as shown in the table.

| **Event** | **Description** | **Rules Processed (in order)** |
|---|---|---|
| Rating Open | When a patron begins a playing session (e.g., puts a card in a machine) | 1. Patron Targeting Rules |
| | | 2. Comp generation Rules |
| Rating Close | When a patron ends a playing session (e.g., removes a card from a machine) | 1. Play Eligibility Rules |
| | | 2. Patron Targeting Rules |
| | | 3. Comp generation Rules |
| Patron activity data collected by CMS, LMS, EMS, POS, or other management system | When a patron conducts non-gaming activity, such as staying at a hotel, eating at a restaurant, attending an event, or purchasing a good or service | 1. Patron Targeting Rules |
| | | 2. Comp generation Rules |
| Offer Redemption | Occurs when a patron redeems coupon for a particular promotion | 1. Patron Targeting Rules |
| | | 2. Offer Redemption Rules |
| New CMS Customer | Occurs when a new patron is created in the CMS | 1. Patron Targeting Rules |
| | | 2. Play Comp generation Rules |

Before implementing a new promotion on the system, the operator may test the promotion to see how it will react to a sample set of data and whether its operation is in accord with the promotion design. Once the promotion is implemented on the system, the rules engine is asynchronously invoked as the system receives data from the events described above. This data, for example, is transmitted from a Patron Activity interface 410 of a particular location 400, or is inputted into the MA module 306 via an operator terminal 320. After the comp management application 300 collects the data and for processing, the application 300 loads a list of all available promotions that are active during that period and are valid for the property from where the data came. Each promotion's rules operate on the data as described, and the associated actions are performed if the conditions specified in the rules are evaluated to be true.

As noted above, an operator may define and run multiple promotions concurrently, and the multiple promotions may apply to a particular property. In such a circumstance, it may be desired that only the rules of one promotion be applied to a particular event at a property. For example, in the case where there is an enterprise-level and a property-level promotion, a patron's gaming activity may generate comps in both promotions. The enterprise, however, may not want a patron to receive double comps from multiple promotions. In such a case, the comp management application 300 includes code to prioritize promotions. For example, the application 300 may be programmed to not give comps in more than one promotion in response to a single Rating Close event for a patron. This could be accomplished by programming the comp management application 300 to not process the Comp Generation rules for any other promotions after the system has given a comp to the patron for a particular promotion. Alternatively, this could also be accomplished by incorporating rules in one or more promotions to avoid creating comps in more than one of the promotions.

In addition to a rules engine, many other embodiments are possible for creating the rules for a new promotion. For example, for greater flexibility, the rules generator could be configured to accept straight text according to a predefined programming language. Before adding the rule to the promotion, the rules generator would check it for syntax errors. This would give a high level of flexibility to operators for creating promotions.

Alternatively, promotion templates could be used where more control by the enterprise is desired ― for example where enterprise-level operator wants to limit the ability of local property-level operators to customize promotions. In such cases, the enterprise-level operator provides the local operators with promotion templates, where the templates have most or all of the rules defined. The templates only would allow customization of certain rule parameters, such as a range of dates for the promotion. The local operators use the PMRP module 302 to create promotions using the limited base rule set allowed by the templates.

### Modifying a Promotion

The use of a rules engine in the PMRP module 302 allows operators to dynamically change the rules of a promotion efficiently. Moreover, the easily understandable business language frees business users from reliance on IT personnel. In one embodiment, the rules engine is accessible through a web-enabled editor, which allows global access to the rules engine from remote locations. In addition to creating promotions, an operator can modify an existing promotion using the comp management application 300.

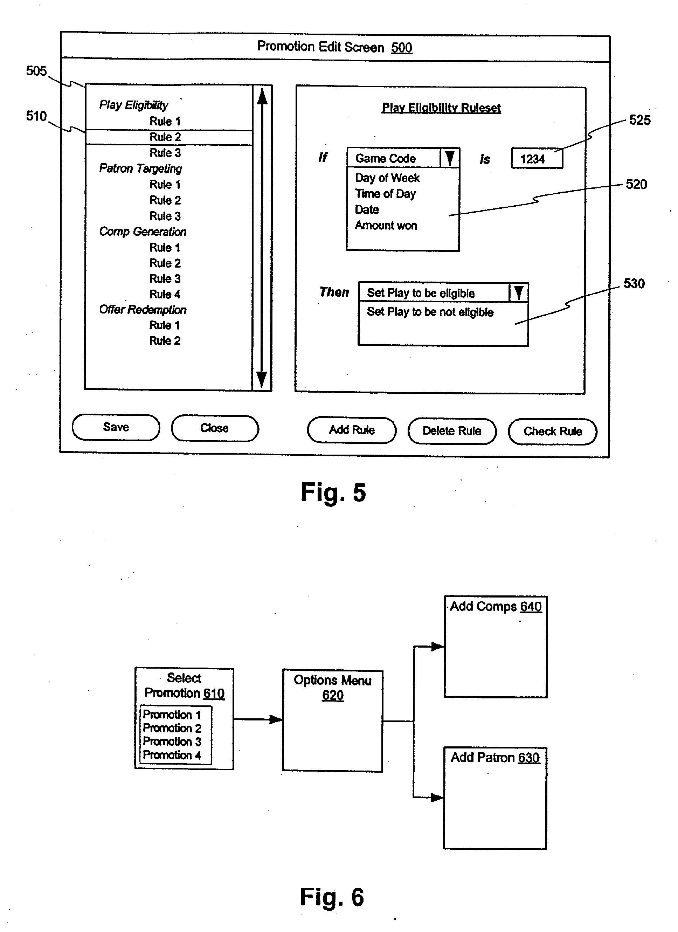

Fig. 5 shows an embodiment of a screen 500 for creating or modifying a promotion using the PMRP module 302. The Promotion Edit Screen 500 is accessible via an operator terminal 320. On the left of the screen 500 is a rules browser panel 505 that shows each of the rulesets and associated rules for the promotion. To modify a rule, the user selects one of the rules. In Fig. 5, Rule 2 of the Play Eligibility ruleset is selected, which is shown by the highlight box 510. When a rule is selected, the conditional if/then rule statement appears in the rule editor panel 515 on the right, from which the rule can be edited. The rule editor panel 515 shown in Fig. 5 is an example of a rules engine embodiment described above. In this example, a user can modify the rule by changing the conditional variable in the conditional variable pull-down menu 520, the value in the conditional value entry box 525, or the action in the action pull-down menu 530. The conditional variable pull-down menu 520 contains a list of each of the variables applicable to the ruleset selected in the rules browser panel 505. Additionally, the action pull-down menu 530 contains a list of each of the actions applicable to that ruleset. (The variables and actions applicable to each of the rulesets for an embodiment are provided in tables above.) The user can save the rules, add new rules, delete existing rules, or check (e.g., for proper ranges) rules.

Once a promotion's rules are modified and saved, the changes are reflected in the promotion definitions database 314, which stores the current rules for the promotions. Accordingly, if an operator at one location edits the rulesets of a promotion that applies to multiple locations, these changes affect how the promotion performs at each of the other locations to which the promotion applies. This enables the remote creation and maintenance of multiple promotions that may apply to one, several, or all promotions of an enterprise.

### Manual Adjustments

In certain circumstances, it may be desirable for an operator to be able to debit or credit a patron's account. This issue may arise for reasons such as customer service issues, service recovery, system failures, and where a patron needs to be added to a promotion. The MA module 306 enables an operator to view and modify the list of patrons eligible for a particular promotion and to change the number of a patron's comps in a particular promotion.

Fig. 6 shows a screen flow for accessing the MA module 306 from an operator terminal 320. From a Select Promotion screen 610, the user first selects the promotion in which the manual adjustment is desired. Then, the user is presented with a list of options in an Options Menu screen 620. In this embodiment, there are two options available: adding a patron to the promotion and adding comps to a patron's account for the promotion.

In one embodiment, patrons must specifically be eligible for a promotion before they can earn comps for the promotion based on their gaming activity. The Add Patron screen 630 enables a user to view a list of patrons that are eligible for the promotion. The user can add patrons to the list and remove patrons from the list. The Add Comps screen 640 enables a user to adjust a patron's comps in the promotion. In this screen, the user views a list of all patron's eligible for the promotion, selects a particular patron, and adds or removes comps for that patron.

### Patron Status

The PS module 304 allows individual patrons to view their comps earned using, e.g., a customer service interface 420 at a location 400. In one embodiment, a patron logs into the PS module 304 by, e.g., swiping a player tracking card or by keying in patron-specific information on a keyboard or touchscreen of a customer service interface 420. In another embodiment, patrons may also access the PS module 304 via the Internet 112 using a personal computer 324 or other web-enabled device. After the patron logs into the system, the patron can view his comps and, preferably, information about anything else that the enterprise desires, such as patron statistics and other promotions.

### Redemption of Comps

Earned comps are stored by the system, where patrons can later redeem these comps for goods, services, or additional play funded by the enterprise. In an embodiment, the comps are stored in the Comps database 316. Depending on the application of the system, various methods of allowing patrons to redeem comps are envisioned. For example, in a casino environment where a patron desires to redeem comps to see a show, the patron first expresses that desire to a casino employee. Preferably, the enterprise has one or more designated areas where patrons may go to redeem comps. In response to a request to redeem comps, an employee enters the patron's information into the system manually or by swiping the patron's tracking card through a card reader. Using the system, the employee verifies that the patron has sufficient comps and, if so, provides the patron with tickets for the requested show or a comp slip that the patron can trade in for the tickets. The employee then manually deducts the spent comps from the patron's account using the MA module 306 (described above in connection with Figs. 3 and 6).

In another embodiment, the comps transaction is performed automatically, without requiring an operator to access the system and manually deduct spent comps. For example, a patron may redeem earned comps for a meal in a restaurant associated with the enterprise. The patron provides the server with the patron's identification (e.g., by giving the server the patron's tracking card), which the server enters into the system. Advantageously, the server enters the patron's identification by swiping the patron's tracking card into a card reader coupled to the system. Knowing the identification of the patron and the goods, service provided, or additional play provided, the system calculates the number of comps to deduct from the patron's account.

In another embodiment, patrons redeem comps remotely by connecting to the system via the Internet. As shown in Fig. 3, patrons can couple to the comp management application 300 over the Internet 322 using their computer system 324 at home. For example, a patron may make reservations to stay in a hotel associated with the enterprise by accessing a web site, as is well known in the art. The patron then provides the system with some identification (e.g., a patron tracking ID preferably coupled with a secure password or other personal information), which the system then uses to determine whether the patron has sufficient comps. The system then deducts a predetermined number of comps from the patron's account in exchange for making the hotel reservation.

The methods of redeeming comps described above are provided by way of example only. Accordingly, it can be appreciated that any of a number of redemption schemes can be used to exchange comps for goods, services, or additional play within the scope of the present invention.

### Summary

Preferred embodiments of the invention have been discussed as specifically applied to enterprise promotions in the context of a casino. The system is advantageously applied to generating and managing comps for casinos and other gaming enterprises; however, the invention can be applied broadly to many other enterprises to generate and manage any type of "points" that patrons can earn and redeem. For example, the present invention can be used to manage redeemable points in the fields of credit cards, airline frequent flyer miles, entertainment, dining services, shopping, and on-line activity.

In addition, the multiple promotions can apply to a set of physical locations or, for example, to virtual locations such as web sites. Physical locations include casinos, cruise ships, restaurants, and other retail environments. Where an enterprise location is a web site, patrons could generate comps in one or more comps promotions via certain qualifying on-line activity. Depending on a promotion's rules for comp generation, qualifying on-line activity includes user registration at the web site, logging into and visiting the web site, viewing particular pages or advertisements on the web site, on-line gaming, answering on-line questionnaires, and purchasing goods or services from the web site. A promotion could be configured to apply to the web site as well as a set of the enterprise's locations, wherein patrons earn comps in the promotion through their activity on-line and at one or more of the enterprise's properties. Patrons can then redeem comps earned both on-line and in-property.

The foregoing description of the embodiments of the invention has been presented for the purposes of illustration and description. It is not intended to be exhaustive or to limit the invention to the precise forms disclosed. Persons skilled in the relevant art can appreciate that many modifications and variations are possible in light of the above teaching. In particular, many variations and specific design choices can be made to the specific embodiments of the comp management system described herein without departing from the inventive concepts. It is therefore intended that the scope of the invention be limited not by this detailed description, but rather by the claims appended hereto.

## Claims

1. A computer-implemented method for managing comps for an enterprise, the method comprising:
monitoring patron activity, the patron activity relating to transactions between the enterprise and one or more patrons; and
generating comps for the one or more patrons using a set of patron targeting rules and a set of comp generation rules, the patron targeting rules determining whether each patron is eligible to have comps generated therefor, and the comp generation rules determining the number of comps to be generated for each patron based on the patron activity if the patron is eligible.

2. The method of claim 1, wherein monitoring patron activity comprises monitoring patron activity at a plurality of locations associated with the enterprise.

3. The method of claim 1, wherein the patron activity includes gaming in a casino environment.

4. The method of claim 1, wherein the patron activity includes non-gaming activity.

5. The method of claim 1, wherein the set of patron targeting rules includes a rule that allows the patrons to earn comps if they are included in a patron target list, the patron target list identifying a set of patrons.

6. The method of claim 1, wherein the set of comp generation rules includes a rule that generates comps based on a patron's coin in.

7. The method of claim 1, further comprising:
receiving requests from patrons to redeem comps for goods, services, or additional play; and
responsive to a request from a patron to redeem comps,
deducting a predetermined number from the patron's comps, and
providing the patron with the requested goods, services, or additional play.

8. The method of claim 7, further comprising:
responsive to a request from a patron to redeem comps, determining whether the patron has the predetermined number of comps for satisfying the patron's request.

9. The method of claim 7, wherein receiving requests includes receiving requests from patrons over the Internet.

10. The method of claim 1, further comprising:
modifying the patron targeting rules or comp generation rules.

11. The method of claim 10, wherein the modifying comprises using a rules engine.

12. The method of claim 1, further comprising:
causing to expire any comps not generated within a predetermined rolling accumulation period, wherein expired comps cannot be redeemed.

13. The method of claim 1, further comprising:
causing to expire all comps associated with a patron if the patron does not earn a predetermined number of comps within a predetermined time period, wherein expired comps cannot be redeemed.

14. The method of claim 1, wherein generating comps includes generating a comp for each patron only if the patron has fewer than a predetermined upper limit of comps.

15. A computer-implemented method of conducting multiple comps promotions at multiple locations of an enterprise, each comps promotion applying to one or more of the locations, the method comprising:
monitoring patron activity at each of the locations, the patron activity relating to transactions between the enterprise and one or more patrons; and
generating comps for the patrons in each comps promotion that applies to the location using a set of patron targeting rules and a set of comp generation rules, the patron targeting rules determining whether each patron is eligible to have comps generated therefor, and the comp generation rules determining the number of comps to be generated for each patron based on the patron activity if the patron is eligible.

16. The method of claim 15, wherein a first comps promotion applies to a different set of locations than a second comps promotion.

17. The method of claim 15, further comprising:
receiving requests from patrons to redeem comps associated with a promotion for goods, services, or additional play; and
responsive to a request from a patron to redeem comps,
deducting a predetermined number from the patron's comps associated with the promotion, and
providing the patron with the requested goods, services, or additional play.

18. The method of claim 15, wherein the patron activity includes gaming in a casino environment.

19. The method of claim 15, wherein the patron activity includes non-gaming activity.

20. An enterprise promotion system for simultaneously conducting multiple comps promotions for an enterprise having multiple locations, the system comprising:
one or more management systems adapted to monitor patron activity at the locations and create patron activity data based on the patron activity;
a comps promotion database for storing rules associated with each of a plurality of comps promotions, the rules for at least one promotion including patron targeting rules that determine whether each patron may earn comps and comp generation rules that determine the number of comps earned from each eligible patron's activity; and
a maintenance module coupled to the comps promotion database, the maintenance module adapted to receive the patron activity data from the management systems and, for any comps promotion that applies to the location where the corresponding patron activity occurred, to generate comps for each patron in the comps promotion according to the promotion's rules.

21. The system of claim 20, further comprising
a maintenance module coupled to the comps promotion database, the maintenance module adapted to add patron targeting and comp generation rules associated with a comps promotion responsive to requests from an operator.

22. The system of claim 20, further comprising
a maintenance module coupled to the comps promotion database, the maintenance module adapted to modify the patron targeting and comp generation rules associated with a comps promotion responsive to requests from an operator.

23. The system of claim 22, wherein the maintenance module is coupled to a rules engine for receiving requests from an operator to modify the patron targeting and comp generation rules.

24. The system of claim 20, wherein the patron activity includes gaming in a casino environment.

25. The system of claim 20, wherein the patron activity includes non-gaming activity.

26. A method of defining a comps promotion for an enterprise, the method comprising:
defining a set of locations associated with the enterprise where the comps promotion applies;
providing a set of patron targeting rules that determine whether each patron is eligible to have comps generated therefor; and
providing a set of comp generation rules that determine the number of comps to be generated for each patron based on the patron activity if the patron is eligible.

27. The method of claim 26, wherein the set of patron targeting rules includes a rule that allows the patrons to earn comps if they are included in a patron target list, the patron target list identifying a set of patrons.

28. The method of claim 26, wherein the set of comp generation rules includes a rule that generates comps based on a patron's coin in.

29. The method of claim 26, wherein providing a set of patron targeting rules and providing a set of comp generation rules each include using a rules engine.

30. The method of claim 26, further comprising:
defining a rolling accumulation period, in which any comps not generated within the rolling accumulation period expire.

31. The method of claim 26, further comprising:
defining a frequency limitation that causes to expire all comps associated with a patron if the patron does not earn a predetermined number of comps within a predetermined time period.

32. The method of claim 26, further comprising:
defining an upper limit of comps, wherein a patron may earn comps only if the patron has fewer than a the upper limit.
